# FASCICULE DE BREVET EUROPEEN

(11) **EP 2 085 676 B1**
(45) Date de publication et mention de la délivrance du brevet: **07.09.2011**
(21) Numéro de dépôt: 09305074.8
(22) Date de dépôt: 28.01.2009
(51) Int. Cl.: F16L 25/02

(54) **Dispositif formant raccord isolant galvanique**
Vorrichtung, die einen isolierten galvanischen Kontakt bildet
Device forming a galvanic isolation connector

(30) Priorité: 04.02.2008 FR 0800596
(43) Date de publication de la demande: 05.08.2009
(73) Titulaire: Atlantic Industrie, 85000 La Roche sur Yon (FR)
(72) Inventeur: Girard, Wilfried, 85170 Saligny (FR)
(74) Mandataire: Laget, Jean-Loup

(56) Documents cités:
- DE-A1- 2 142 747
- DE-B- 1 048 103
- US-A- 4 541 658
- US-A- 4 805 932
- US-A- 5 927 761

## Description

L'invention est relative à un dispositif formant raccord isolant, en particulier pour le raccordement d'un chauffe-eau, d'un ballon ou d'un équipement sanitaire à des conduites d'eau.

L'invention est également relative à un organe intermédiaire en matériau isolant, formant un élément d'un dispositif formant raccord isolant selon l'invention.

Pour raccorder des chauffe-eau, des ballons ou des équipements sanitaires à des canalisations en cuivre, on doit généralement raccorder des piquages en acier à ces canalisations en cuivre. Le raccordement de deux métaux différents, tels que le cuivre et l'acier, peut conduire par contact direct à la constitution d'une pile galvanique susceptible de provoquer une corrosion ou un dépôt important de tartre.

Pour remédier à ces inconvénients, il est connu de séparer les deux métaux pour éviter un contact direct, par exemple en utilisant des raccords isolants.

Ces raccords isolants assurent la liaison mécanique et l'étanchéité de deux tubes en matériaux différents, tout en créant une barrière galvanique entre les matériaux différant l'un de l'autre de par leur potentiel électrochimique.

Cette barrière galvanique évite ainsi l'apparition de bouchons de tartre et les risques de perçage ou de fuite par corrosion électrochimique d'une partie métallique.

Un raccord isolant connu correspondant aux figures 1 et 2 du document FR 2.759.762 comporte une première pièce tubulaire en acier pourvue d'un taraudage et d'un filetage, une deuxième pièce tubulaire en laiton pourvue d'une collerette et d'un filetage et un écrou adapté à ladite collerette, ainsi que deux pièces en matière plastique disposées entre les trois pièces métalliques usinées, afin d'assurer une isolation électrique après assemblage.

Un autre raccord isolant diélectrique connu du document FR 2.759.762 est réalisé par un sertissage effectué pour rabattre un tronçon d'extrémité d'un appendice d'une pièce métallique pour emprisonner des moyens diélectriques annulaires entre ladite pièce métallique et une autre pièce métallique, en interdisant ainsi leur contact direct.

On connaît également des raccords isolants comportant une pièce supplémentaire assurant la fonction isolation électrique. Lorsque cette pièce supplémentaire est en matériau plastique et est vissée de part et d'autre à ses extrémités avec des pièces métalliques à isoler l'une de l'autre, l'assemblage présente une tenue mécanique médiocre déterminée par la résistance de la matière plastique. Pour remédier à cet inconvénient, la pièce supplémentaire peut être réalisée sous forme bimétallique avec éventuellement une interface en matière plastique emprisonnée par un sertissage analogue à celui décrit en référence au document FR 2.759.762. Le document US 5927761 (fig.9) décrit un exemple de raccord isolant ayant les caractéristiques du préambule de la revendication 1.

Un premier but de l'invention est de remédier aux inconvénients de la technique connue, en proposant un nouveau dispositif formant raccord isolant de fabrication simple et économique.

Un deuxième but de l'invention est de fournir un nouveau dispositif formant raccord isolant ergonomique, permettant une installation rapide et sûre.

L'invention a pour objet un dispositif formant raccord isolant galvanique, comportant une première pièce réalisée en un premier matériau métallique, une deuxième pièce réalisée en un deuxième matériau métallique, les dits premiers et deuxième matériaux métalliques différant de par leur potentiel électrochimique, et un organe intermédiaire réalisé en un matériau isolant et interdisant tout contact direct entre la première pièce et la deuxième pièce, caractérisé par le fait que l'organe intermédiaire en matériau isolant présente une conformation de douille encliquetable destinée à être montée prisonnière entre la première pièce et la deuxième pièce.

Selon d'autres caractéristiques alternatives de l'invention :
- l'organe intermédiaire comporte des pattes encliquetables dans des logements d'une première pièce munie d'un joint d'étanchéité placé dans une gorge intérieure de cette première pièce ;
- l'organe intermédiaire comporte une partie apte à retenir et à comprimer un joint d'étanchéité dans son logement ;
- les pattes encliquetables présentent des conformations aptes à coopérer avec une deuxième pièce pour repousser et maintenir les pattes encliquetables en position fixe d'encliquetage ;
- l'organe intermédiaire comporte un moyen de positionnement anti-rotation pour assurer le positionnement de l'organe intermédiaire après insertion dans une première pièce ;
- les pattes d'encliquetage comportent un filetage intérieur vissées avec un filetage d'une deuxième pièce lors de l'assemblage du dispositif ;
- la première pièce est un conduit tubulaire muni d'au moins une encoche de positionnement d'un ergot de l'organe intermédiaire ;
- l'organe intermédiaire comporte une collerette montée prisonnière entre lesdites deux pièces avec absence de jeu, de manière à permettre la vérification du bon assemblage du dispositif ;
- la pièce en matériau le plus résistant, par exemple en acier, est disposée radialement extérieurement et la pièce en matériau moins résistant, par exemple en laiton, est disposée radialement intérieurement, de manière à soumettre l'organe intermédiaire en matériau le moins résistant, par exemple en matière plastique, uniquement à des efforts de compression.

L'invention a également pour objet un organe intermédiaire de raccord isolant galvanique pour dispositif tel que décrit ci-dessus.

L'invention sera mieux comprise grâce à la description qui va suivre donnée à titre exemple non limitatif en référence aux dessins annexés dans lesquels :
La figure 1 représente schématiquement une vue en perspective éclatée d'un dispositif selon l'invention ;
La figure 2 représente schématiquement une vue en coupe longitudinale d'un dispositif selon l'invention, assemblé, et correspondant à la ligne II-II de la figure 1 ;
La figure 3 représente schématiquement une autre vue en coupe longitudinale d'un dispositif selon l'invention, assemblé et correspondant à la ligne.

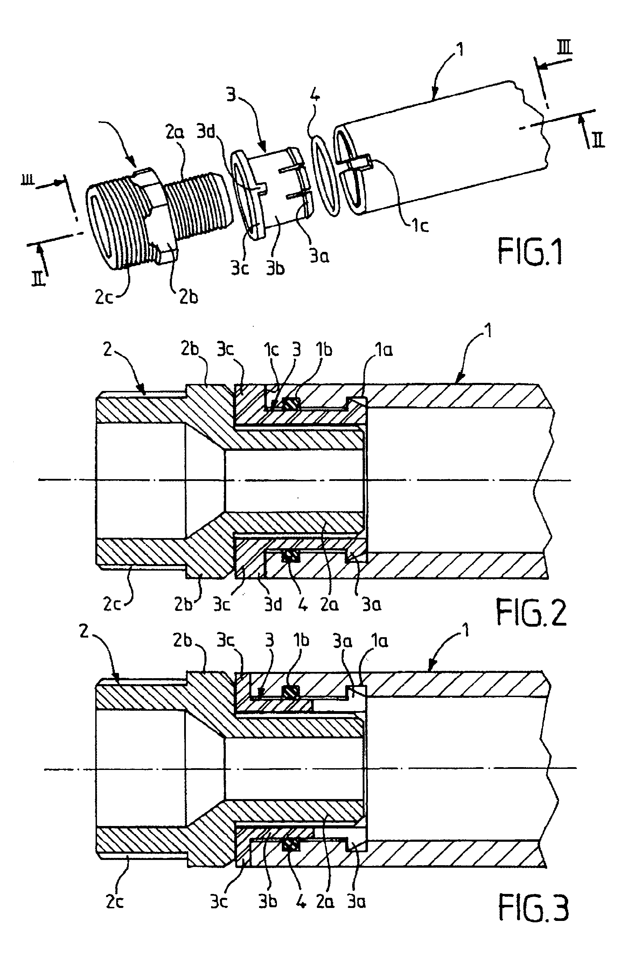

En référence aux figures 1 à 3, les éléments identiques ou fonctionnellement équivalents sont repérés par des chiffres de référence identiques.

Sur la figure 1, un dispositif selon l'invention comporte une première pièce 1 en acier, une deuxième pièce 2 en laiton et un organe intermédiaire 3 en matériau isolant.

La première pièce 1 en acier est, par exemple, constituée par un tube de piquage d'une cuve de chauffe-eau.

La deuxième pièce 2 en laiton est, par exemple, un raccord à une conduite non représentée, de préférence filetée à ses deux extrémités.

L'invention décrite en référence à un couple de matériaux laiton/acier n'y est nullement limitée, mais couvre également tout autre couple de matériaux, notamment de matériaux métalliques, différant l'un de l'autre de par leur potentiel électrochimique.

L'organe intermédiaire 3 est réalisé de préférence en matériau synthétique isolant électrique et galvanique, généralement en matière plastique.

Un joint d'étanchéité 4, de préférence un joint torique en matériau élastomère fluoré, est monté à l'intérieur d'une gorge prévue dans la première pièce 1 ou dans la deuxième pièce 2.

Lorsque l'assemblage des pièces 1 à 4 est effectué, le joint d'étanchéité 4 est comprimé et retenu dans sa gorge par l'organe intermédiaire 3 serré entre les deux pièces métalliques 1 et 2.

La première pièce 1 en acier est un conduit tubulaire comportant des logements 1a, une gorge intérieure 1 b pour le montage du joint d'étanchéité 4 et au moins une encoche 1 c de positionnement de l'organe intermédiaire 3.

La deuxième pièce 2 en laiton est un raccord comportant un filetage 2a de petit diamètre, une partie intermédiaire 2b comportant des méplats de serrage, et un filetage 2c de grand diamètre permettant le raccordement à une tuyauterie non représentée.

L'organe intermédiaire 3 comporte des pattes 3a encliquetables en forme de griffe destinées à s'accrocher dans les logements 1a de la première pièce 1 en acier, une partie intermédiaire tubulaire 3b destinée à retenir et à comprimer le joint 4 dans sa gorge 1b, et une collerette 3c munie d'au moins un ergot 3d de positionnement dans une encoche 1 c de la pièce tubulaire 1 en acier.

Les pattes 3a en forme de griffe comportent de préférence chacune une extrémité en dent de loup ou "en sapin" destinée à provoquer un accrochage sûr et fiable dans un logement 1a.

Les pattes 3a encliquetables sont de préférence séparées l'une de l'autre par des fentes longitudinales et sont filetées radialement intérieurement, de manière à coopérer avec le filetage 2a de petit diamètre du raccord 2 en laiton.

Sur la figure 2, le joint 4 d'étanchéité est monté dans la gorge 1b de la première pièce 1, avant que l'organe intermédiaire 3 soit poussé à l'intérieur de la première pièce 1 jusqu'à positionnement de chaque ergot 3d dans une encoche 1c et jusqu'à encliquetage complet des pattes 3a dans leurs logements 1 a.

Le positionnement de l'organe intermédiaire 3 garantit le placage du joint 4 d'étanchéité dans la gorge intérieure 1 b de la première pièce 1 en acier.

Après avoir positionné l'organe intermédiaire 3 dans la première pièce 1 en acier munie du joint d'étanchéité 4, on visse la deuxième pièce 2 en laiton à l'intérieur de l'organe intermédiaire 3, de manière que le filetage 2a repousse les pattes 3a encliquetées dans leurs logements 1a, en empêchant ainsi tout glissement longitudinal de l'organe intermédiaire 3.

Le maintien en position fixe de l'organe intermédiaire 3 permet d'éviter un déplacement du joint 4 d'étanchéité dans sa gorge 1a susceptible de provoquer une fuite.

Avantageusement, la longueur du filetage 2a correspond sensiblement à la longueur de l'organe intermédiaire 3, tandis que les diamètres extérieurs des éléments 1, 2 et 3 sont sensiblement égaux.

L'égalité des diamètres extérieurs des éléments 1, 2 et 3 évite un accrochage indésirable sur des aspérités ou des épaulements de jonction entre deux des éléments 1 à 3.

Sur la figure 3, le dispositif selon l'invention assemblé en référence à la figure 2, est représenté en coupe selon un plan diamétral ne passant ni par les ergots 3d de l'organe intermédiaire 3, ni par les encoches 1c de la pièce 1 en acier.

Après assemblage des éléments 1 à 4 du dispositif, la collerette 3c de l'organe intermédiaire 3 est serré entre la partie intermédiaire 2b de la deuxième pièce 2 en laiton et une extrémité de la première pièce 1 en acier.

L'absence de jeu de part et d'autre de la collerette 3c constitue un indicateur de la bonne exécution de l'assemblage du dispositif selon l'invention.

La conformation de l'organe intermédiaire 3 en douille encliquetable montée prisonnière entre les pièces 1 et 2 évite tout risque de rupture, car la douille 3 en matériau synthétique est uniquement soumise à des efforts de compression résultant du serrage.

L'invention permet ainsi d'éviter les fatigues indésirables du matériau de la douille 3 pouvant résulter d'une mise en flexion ou de contraintes alternées, ainsi que les fissures pouvant constituer des amorces de rupture.

L'invention décrite en référence à un mode de réalisation particulier n'y est nullement limitée, mais couvre au contraire toute modification de forme et toute variante de réalisation dans le cadre de l'invention.

## Revendications

1. Dispositif formant raccord isolant galvanique, comportant une première pièce (1) réalisée en un premier matériau métallique, une deuxième pièce (2) réalisée en un deuxième matériau métallique, les dits premiers et deuxième matériaux métalliques différant de par leur potentiel électrochimique, et un organe intermédiaire (3) réalisé en un matériau isolant et interdisant tout contact direct entre la première pièce (1) et la deuxième pièce (2), l'organe intermédiaire (3) en matériau isolant présentant une conformation de douille encliquetable destinée à être montée prisonnière entre la première pièce (1) et la deuxième pièce (2), **caractérisé en** combinaison par le fait que l'organe intermédiaire (3) comporte des pattes encliquetables (3a) dans des logements (1a) de la première pièce (1) munie d'un joint d'étanchéité (4) placé dans une gorge (1 b) intérieure de cette première pièce (1), et par le fait que les pattes encliquetables (3a) présentent des conformations aptes à coopérer avec la deuxième pièce (2) pour repousser et maintenir les pattes encliquetables (3a) en position fixe d'encliquetage.

2. Dispositif selon la revendication 1, **caractérisé par le fait que** l'organe intermédiaire (3) comporte une partie (3b) apte à retenir et à comprimer un joint d'étanchéité (4) dans son logement.

3. Dispositif selon la revendication 1 ou la revendication 2, **caractérisé par le fait que** l'organe intermédiaire (3) comporte un moyen de positionnement anti-rotation (3d) pour assurer le positionnement de l'organe intermédiaire (3) après insertion dans une première pièce (1).

4. Dispositif selon la revendication 1, **caractérisé par le fait que** les pattes d'encliquetage (3a) comportent un filetage intérieur vissé avec un filetage (2a) d'une deuxième pièce (2) lors de l'assemblage du dispositif.

5. Dispositif selon la revendication 1 ou la revendication 3, **caractérisé par le fait que** la première pièce (1) est un conduit tubulaire muni d'au moins une encoche (1 c) de positionnement d'un ergot (3d) de l'organe intermédiaire (3).

6. Dispositif selon l'une quelconque des revendications précédentes, **caractérisé par le fait que** l'organe intermédiaire (3) comporte une collerette (3c) montée prisonnière entre lesdites deux pièces avec absence de jeu, de manière à permettre la vérification du bon assemblage du dispositif.

7. Dispositif selon l'une quelconque des revendications précédentes, **caractérisé par le fait que** la pièce (1) en matériau le plus résistant, par exemple en acier, est disposée radialement extérieurement et la pièce (2) en matériau moins résistant, par exemple en laiton, est disposée radialement intérieurement, de manière à soumettre l'organe intermédiaire en matériau le moins résistant, par exemple en matière plastique, uniquement à des efforts de compression.

8. Organe intermédiaire de raccord isolant galvanique pour dispositif selon l'une quelconque des revendications 1 à 7.

## Claims

1. A device forming a galvanic insulation connector, including a first part (1) made in a first metal material, a second part (2) made in a second metal material, said first and second metal materials differing by their electrochemical potential, and an intermediate member (3) made in an insulating material and preventing any direct contact between the first part (1) and the second part (2), the intermediate member (3) in insulating material having a conformation of a snap-on socket intended to be mounted confined between the first part (1) and the second part (2), **characterized in** a combination by the fact that the intermediate member (3) includes snap-on tabs (3a) in housings (1a) of the first part (1) provided with a seal gasket (4) placed in an interior groove (1b) of this first part (1), and by the fact that the snap-on tabs (3a) have conformations capable of co-operating with the second part (2) for pushing back and maintaining the snap-on tabs (3a) in a fixed snapped-on position.

2. The device according to claim 1, **characterized by** the fact that that the intermediate member (3) includes a portion (3b) capable of retaining and of compressing a seal gasket (4) in its housing.

3. The device according to claim 1 or claim 2, **characterized by** the fact that the intermediate member (3) includes an anti-rotation positioning means (3d) for ensuring the positioning of the intermediate member (3) after insertion in a first part (1).

4. The device according to claim 1, **characterized by** the fact that the snap-on tabs (3a) include an inner threading screwed with a threading (2a) of a second part (2) during the assembling of the device.

5. The device according to claim 1 or claim 3, **characterized by** the fact that the first part (1) is a tubular conduit provided with at least one notch (1c) for positioning a lug (3d) of the intermediate member (3).

6. The device according to any of the preceding claims, **characterized by** the fact that the intermediate member (3) includes a flange (3c) mounted so as to be confined between said two parts with absence of play, so as to allow verification of the proper assembling of the device.

7. The device according to any of the preceding claims, **characterized by** the fact that that the part (1) in more resistant material, for example in steel, is radially positioned exteriorly and the part (2) in less resistant material, for example in brass, is radially positioned interiorly so as to subject the intermediate member in the less resistant material, for example in plastic material, to compression forces exclusively.

8. An intermediate member of a galvanic insulating connection for a device according to any of claims 1 to 7.

## Patentansprüche

1. Vorrichtung, die einen isolierenden galvanischen Kontakt bildet, die ein erstes Teil (1) aufweist, das aus einem ersten metallischen Werkstoff hergestellt ist, ein zweites Teil (2), das aus einem zweiten metallischen Werkstoff hergestellt ist, wobei der sich erste und zweite metallischen Werkstoffe durch ihr elektrochemisches Potential unterscheiden, und ein Zwischenorgan (3), das aus einem isolierenden Werkstoff hergestellt ist und jedweden direkten Kontakt zwischen dem ersten Teil (1) und dem zweiten Teil (2) verhindert, wobei das Zwischenorgan (3) aus isolierendem Werkstoff eine rastbare Buchsenkonformation aufweist, die dazu bestimmt ist, zwischen dem ersten Teil (1) und dem zweiten Teil (2) gefangen montiert zu sein, **dadurch gekennzeichnet, dass** das Zwischenorgan (3) Rastfüße (3a) in Aufnahmen (1a) des ersten Teils (1) aufweist, das mit einem Dichtring (4) ausgestattet ist, der in einer inneren Hohlkehle (1b) dieses ersten Teils (1) platziert ist, und dadurch, dass die Rastfüße (3a) Konformationen aufweisen, die imstande sind, mit dem zweiten Teil (2) zusammenzuarbeiten, um die Rastfüße (3a) zurückzudrücken und in fester Raststellung zu halten.

2. Vorrichtung nach Anspruch 1, **dadurch gekennzeichnet, dass** das Zwischenorgan (3) einen Abschnitt (3b) aufweist, der imstande ist, einen Dichtring (4) in seiner Aufnahme zu halten und zusammenzudrücken.

3. Vorrichtung nach Anspruch 1 oder Anspruch 2, **dadurch gekennzeichnet, dass** das Zwischenorgan (3) ein Antirotations-Positionierungsmittel (3d) aufweist, um die Positionierung des Zwischenorgans (3) nach dem Einsetzen in ein erstes Teil (1) zu gewährleisten.

4. Vorrichtung nach Anspruch 1, **dadurch gekennzeichnet, dass** die Rastfüße (3a) ein bei der Montage der Vorrichtung mit einem Gewinde (2a) eines zweiten Teils (2) geschraubtes Innengewinde aufweisen.

5. Vorrichtung nach Anspruch 1 oder Anspruch 3, **dadurch gekennzeichnet, dass** das erste Teil (1) eine Rohrleitung ist, die mit mindestens einer Kerbe (1c) zur Positionierung eines Sporns (3d) des Zwischenorgans (3) ausgestattet ist.

6. Vorrichtung nach einem der vorangehenden Ansprüche, **dadurch gekennzeichnet, dass** das Zwischenorgan (3) einen Ring (3c) aufweist, der gefangen zwischen den zwei Teilen ohne Spiel derart montiert ist, dass die Überprüfung der ordnungsgemäßen Montage der Vorrichtung gestattet wird.

7. Vorrichtung nach einem der vorangehenden Ansprüche, **dadurch gekennzeichnet, dass** das Teil (1) aus dem widerstandsfähigstem Werkstoff, zum Beispiel aus Stahl, radial außen angeordnet ist, und das Teil (2) aus weniger widerstandsfähigem Werkstoff, zum Beispiel aus Messing, radial innen angeordnet ist, um das Zwischenorgan aus dem am wenigsten widerstandsfähigem Werkstoff, zum Beispiel aus Kunststoff, nur Kompressionskräften auszusetzen.

8. Isolierendes galvanisches Kontaktzwischenorgan für Vorrichtung nach einem der Ansprüche 1 bis 7.
